# EUROPÄISCHE PATENTSCHRIFT

(11) **EP 2 644 738 B1**
(45) Veröffentlichungstag und Bekanntmachung des Hinweises auf die Patenterteilung: **10.01.2018**
(21) Anmeldenummer: 13153392.9
(22) Anmeldetag: 31.01.2013
(51) Int. Cl.: C23C 4/11, C23C 4/134, B01D 71/02, B01D 67/00, C01B 3/50, C01B 13/02

(54) **Plasmaspritzverfahren zum Herstellen einer ionenleitenden Membran und ionenleitende Membran**
Plasma spray method for producing an ion conducting membrane and ion conducting membrane
Procédé d'injection par plasma pour la fabrication d'une membrane conductrice d'ions ainsi que la membrane en question

(30) Priorität: 28.03.2012 EP 12161868
(43) Veröffentlichungstag der Anmeldung: 02.10.2013
(73) Patentinhaber: Oerlikon Metco AG, Wohlen, 5610 Wohlen (CH)
(72) Erfinder: Gindrat, Malko Dr., 5610 Wohlen (CH); Damani, Rajiv J. Dr., 8404 Winterthur (CH); Häring, Jochen Dr., 8274 Tägerwilen (CH)
(74) Vertreter: Intellectual Property Services GmbH

(56) Entgegenhaltungen:
- EP-A1- 1 338 671
- EP-A1- 2 030 669
- WO-A1-00/68139
- US-A1- 2005 013 933
- US-B1- 6 638 575

## Beschreibung

Die Erfindung betrifft ein Plasmaspritzverfahren zum Herstellen einer lonenleitenden Membran insbesondere einer wasserstoffionenleitenden oder sauestofflonenleitenden Membran gemäss dem Oberbegriff des Anspruchs 1 und eine ionenleitende Membran Insbesondere eine wasserstoffionenleitende oder sauestoffionenleitende Membran gemäss dem Oberbegriff des Anspruchs 14.

lonenleitende Membrane sind Membrane, die für spezifische Ionen eine hohe selektive Permeabilität aufweisen. Sauerstoffpermeable Membrane sind Schichten, die eine hohe selektive Permeabilität für Sauerstoff bzw. Sauerstoffionen aufweisen und für andere Gase bzw. Ionen im Wesentlichen undurchlässig sind. Dementsprechend werden solche Membrane genutzt, um Sauerstoff aus Gas- oder Fluidgemischen zu extrahieren oder zu reinigen. Entsprechendes gilt für wasserstoffpermeable Membrane für die Extraktion von Wasserstoff aus Gas- oder Fluidgemischen.

Derartige Membrane können aus verschiedenen Materialien hergestellt werden, belspielsweise können sie aus komplexen Oxid-Materialien bestehen, die eine spezifische chemische Zusammensetzung haben und spezifische Phasen bilden. Insbesondere sind keramische Membrane bekannt, die aus Oxiden vom Perowskit-Typ bestehen und die in Form dünner, dichter-d.h. nicht-poröser - Schichten hergestellt werden. Derartige Membrane weisen beispielsweise sowohl eine lonenleitfähigkeit für Sauerstoff oder Wasserstoff als auch eine Elektronenleitfähigkeit auf.

Ein Material, das heute zur Herstellung insbesondere sauerstoffpermeabler Membrane untersucht und verwendet wird, ist eine Keramik, die eine perowskitische Struktur aufweist und neben Sauerstoff die Elemente Lanthan (La), Strontium (Sr), Kobalt (Co) und Eisen (Fe) enthält. Nach den Anfangsbuchstaben dieser vier Elemente wird die Substanz üblicherweise als LSCF bezeichnet.

Sauerstoffpermeable oder wasserstoffpermeable Membrane oder allgemein ionenleitende Membrane aus derartigen Materlalien können belspielsweise mittels konventioneller Herstellungstechniken für Keramiken, wie beispielsweise Pressen, Foliengiessen (tape casting), Schlickergiessen oder Sintern, hergestellt werden oder auch mittels thermischen Spritzens. Für letzteres sind insbesondere thermische Spritzprozesse geeignet, die Im Vakuum durchgeführt werden, womit allgemein gemeint ist, dass der Spritzprozess bei einem Prozessdruck durchgeführt ist, der kleiner als der Umgebungsdruck (normaler Luftdruck) ist.

Insbesondere geeignet ist ein thermisches Niederdruck- oder Vakuum-Plasmaspritzverfahren, das als LPPS Verfahren bezeichnet wird (Low Pressure Plasma Spraying) Mit diesem Vakuum-Plasmaspritzverfahren lassen sich besonders gut dünne und dichte Schichten spritzen, also solche, die auch für ionenleitende oder sauerstoffpermeable oder wasserstoffpermeable Membrane benötigt werden.

Dabei wird in einer Prozesskammer die ionenleitende Membran als Schicht auf einem Substrat abgeschieden. Dazu wird Ausgangsmaterial in Form eines Prozessstrahls mittels eines Prozessgases auf eine Oberfläche des Substrats aufgespritzt. Das Ausgangsmaterial wird bei einem niedrigen Prozessdruck, der beispielsweise höchstens 10 000 Pa ist, in ein Plasma injiziert und dort teilweise oder vollständig geschmolzen.

Bei einem LPPS-Verfahren wird die ionenleitende Membran in Form einer Schicht auf einem Substrat abgeschieden. Das Substrat dient hauptsächlich dazu, die so entstehende sehr dünne und spröde Membran zu stützen und so handhabbar zu machen.

Ein solches Verfahren und eine solche Membran sind z.B. in dem Dokument EP 2 030 669 A1 offenbart Es ist daher die Aufgabe der Erfindung, ein Plasmaspritzverfahren vorzuschlagen, mit weichem eine handhabbare Kombination aus Substrat und ionenleitender Membran insbesondere einer wasserstoffionenleltenden oder sauestoffionenleitenden Membran hergestellt werden kann, die ausserdem eine effektive Extraktion insbesondere von Wasserstoff oder Sauerstoff aus Gas- oder Fluidgemischen ermöglicht. Es ist ausserdem die Aufgabe der Erfindung, eine widerstandsfählge Kombination aus ionenleitender Membran insbesondere einer wasserstoffionenleitenden oder sauestoffionenleitenden Membran auf einem metallischen porösen Substrat vorzuschlagen, die ausserdem eine effektive Extraktion insbesondere von Wasserstoff oder Sauerstoff aus Gas- oder Fluidgemischen ermöglicht.
Erfindungsgemäss wird die Aufgabe durch ein Plasmaspritzverfahren gemäss Anspruch 1 und eine lonenleitende Membran auf einem Substrat gemäss Anspruch 14 gelöst.
Erfindungsgemäss weist das Substrat Poren auf, die so untereinander verbunden sind, dass das Substrat gasdurchlässig ist und ein Anteil einer Gesamtporenfläche an einer Gesamtfläche der Beschichtungsoberfläche wenigstens 30 %, insbesondere wenigstens 40 %, also beispielsweise 40 % oder 45 % beträgt. Unter der Gesamtporenfläche soll die Summe aller Flächen der offenen Poren der Beschichtungsfläche des Substrats verstanden werden. Das Gasgemisch, aus dem insbesondere Wasserstoff oder Sauerstoff extrahiert werden soll, wird über die untereinander verbundenen Poren von einer der Beschichtungsoberfläche gegenüberliegenden Substratrückseite zu den offenen Poren an der Beschichtungsoberfläche geleitet und kommt dort in Kontakt mit der Membran. Von den offenen Poren aus können dann die Wasserstoff- oder Sauerstoffionen durch die Membran dringen und so Wasserstoff oder Sauerstoff aus dem Gasgemisch extrahiert werden.
Damit kann das Substrat neben der Stützung der Membran auch das Fluid-oder Gasgemisch, aus dem Wasserstoff oder Sauerstoff extrahlert werden soll, zur Membran lelten. Ausserdem ist durch die genannte Untergrenze der Gesamtporenfläche gewährleistet, dass ein grosser Anteil der Membran auch mit dem Fluid- oder Gasgemisch in Kontakt kommt und so auch eine effektive Extraktion von Wasserstoff oder Sauerstoff gewährleistet ist.

Die Gesamtporenfläche kann beispielsweise dadurch bestimmt werden, dass die Poren der Beschichtungsoberfläche eingefärbt werden und über ein optisches Messverfahren die Fläche der eingefärbten Poren bestimmt wird.

Ausserdem werden vor oder nach dem Beschichten in das Substrat Mikrokanäle zur Verbesserung einer Gasflussmöglichkeit in Richtung Beschichtungsoberfläche eingebracht. Die Mikrokanäle haben insbesondere einen Durchmesser zwischen 5 und 150 Mikrometer und werden beispielsweise mittels eines Laserbohrverfahrens in das Substrat eingebracht. Damit ist ein besonders effektiver Transport des Gas- oder Fluidgemischs zur Membran möglich.

In Ausgestaltung der Erfindung weisen die Poren eine mittlere Porengrösse von mindestens 1 Mikrometer auf, wobei sich diese Angabe insbesondere nicht nur auf die Poren an der Beschlchtungsoberfläche, sondern auch auf Poren im Innern des Substrats beziehen. Die mittlere Porengrösse wird insbesondere dadurch bestimmt, dass wie oben beschrieben bei einem Schnitt durch das Substrat die sich dann ergebenden offenen Poren eingefärbt werden. Zur Bestimmung der mittleren Porengrösse wird anschliessend eine gerade Linie auf den Schnitt gelegt. Dann werden die einzelnen Abschnitte der genannten Linie, die auf Poren liegen gemessen und aus den gemessenen Längen der Mittelwert gebildet. Dieser Mittelwert entspricht der mittleren Porengrösse.

Untersuchungen haben gezeigt, dass bei Poren mit einer Porengrösse kleiner als 1 Mikrometer die Durchströmung stark erschwert ist, was einen schlechten Transport des Gasgemischs zur Membran zur Folge hat.

In Ausgestaltung der Erfindung weist das Substrat eine auf ein Gesamtvolumen des Substrats bezogene Nutzporosität von mindestens 20 %, insbesondere mindestens 30 %, also beispielsweise 30 % oder 40 % auf. Die Nutzporosität ergibt sich aus dem Quotienten eines untereinander verbundenen Hohlraumvolumens zum Gesamtvolumen des Substrats. Die so genannten abgeschlossenen Hohlräume, die keine Verbindung zur Umgebung des Substrats haben, sind hier nicht von Interesse. Die offenen Hohlräume ergeben an der Beschichtungsoberfläche des Substrats die Poren über die das Gas- oder Fluldgemisch mit der Membran in Kontakt kommen kann.

Durch Verwendung eines Substrats mit der genannten Porosität wird das Gas- oder Fluldgemisch besonders gut zur Membran geleitet, was eine besonders effektive Extraktion von Wasserstoff oder Sauerstoff aus Gas- oder Fluidgemischen ermöglicht.

Eine Abschätzung der Porosität kann auch ausgehend von der oben beschriebenen Bestimmung der Gesamtporenfläche erfolgen. Unter der Annahme, dass die Gesamtporenfläche in jeder zur Beschichtungsoberfläche parallelen Schicht ungefähr gleich ist, kann daraus die Porosität berechnet werden.

Die Nutzporosität kann beispielsweise dadurch bestimmt werden, dass bestimmt wird, welches Volumen eines Gases oder eines Fluids das Substrat aufnehmen kann. Aus dem Verhältnis des so bestimmten Volumens zum Gesamtvolumen des Substrats kann dann die Nutzporosität ermittelt werden.

Das Substrat wird insbesondere mittels eines Sinterverfahrens hergestellt. Damit wird eine freie Formgebung des Substrats ermöglicht und ausserdem lässt sich so eine besonders hohe Porosität des Substrats erreichen.

Die Mikrokanäle sind insbesondere von einer der Beschichtungsoberfläche gegenüberliegenden Substratrückseite in Richtung Beschichtungsoberfläche orientiert und enden vor der Beschichtungsoberfläche. Damit wird das Gas-oder Fluidgemisch, das über die Substratrückseite zugeführt wird einerseits sehr effektiv zur Membran geleitet. Andererseits wird durch das Enden vor der Beschichtungsoberfläche verhindert, dass zu grosse Ausnehmungen an der Beschichtungsoberfläche entstehen, die wie oben beschrieben die Qualität der Schicht und damit der Membran zu stark negativ beeinflussen.

Es ist auch möglich, dass die Mikrokanäle bis zur Beschichtungsoberfläche reichen und damit quasi eine Pore bilden. Das Einbringen erfolgt dann insbesondere vor dem Beschichten, so dass die Mikrokanäle von der Membran abgedeckt werden.

Da die Membrane mit dem Substrat insbesondere auch in hochkorrosiven Umgebungen und bei hohen Temperaturen von über 500 °C eingesetzt werden sollen, sollte die Eisenlegierung Chrom enthalten, wodurch eine hohe Korrosionsbeständigkeit erreicht werden kann.

In Ausgestaltung der Erfindung wird deshalb vorgeschlagen, dass das Substrat, auf dem die die Membran bildende Schicht abgeschieden wird, aus einer Eisenlegierung hergestellt ist, welche einen Chromanteil aufweist, der grösser als 20 Gewichtsprozent und insbesondere grösser als 25 Gewichtsprozent ist, also beispielsweise 22 oder 30 Gewichtsprozent.

Damit wird erreicht, dass das Substrat und damit auch die Kombination aus Substrat und ionenleitender Membran sehr widerstandsfähig und insbesondere korrosionsresistent ist. Gleichzeitig weist die mit dem Plasmaspritzverfahren hergestellte Membran eine gute lonenleitfähigkeit auf, wodurch eine effektive Extraktion von Wasserstoff oder Sauerstoff aus Gas-oder Fluidgemischen ermöglicht wird.

Neben Chrom kann die Eisenlegierung insbesondere noch Kohlenstoff enthalten. Darüber hinaus kann sie auch noch weitere Bestandteile wie beispielsweise Cobalt, Mangan, Molybdän, Niob, Vanadium oder Wolfram aufweisen.

Das Substrat kann beispielsweise aus einer Legierung aus 47 %Nickel (Ni), 22 % Chrom (Cr), 18 % Eisen (Fe), 9 % Molybdän (Mo), 1,5 % Kobalt (Co), 0,6 % Wolfram (W), 0,1 % Kohlenstoff (C), 1 % Mangan (Mn), 1 % Silizium (Si) und 0,008 % Bor (B).

Das in dem Substrat enthaltene Chrom kann allerdings bei zu hohen Temperaturen des Substrats bei der Durchführung des Verfahrens zu Problemen führen. Chrompartikel können dann leicht an die Beschichtungsoberfläche gelangen und dort zu Chromoxid reagieren. Damit kann eine Schicht entstehen, die den lonenaustausch zwischen Gas und Membran behindert. Ausserdem kann Chromoxid keine Elektronen leiten. Beim Einsatz der Membran fallen aber in der Membran überschüssige Elektronen an, die vom Substrat abgeleitet werden müssen. Dabei wäre eine Chromoxidschicht ebenfalls hinderlich.

Beim erfindungsgemässen Verfahren treten prinzipbedingt am Substrat relativ hohe Temperaturen auf. Dies gilt beim Beschichten selbst, aber auch schon in einer vor dem eigentlichen Beschichten stattfindenden Aufheizphase des Substrats. Dabei kann es zum einen zur Ausbildung der beschriebenen Chromoxidschicht kommen. Zum anderen besteht aber auch die Gefahr, dass die Struktur des Substrats durch zu hohe Temperaturen geschädigt wird. Diese Schädigung wird als so genanntes "Creeping" bezeichnet.

In Ausgestaltung der Erfindung werden Prozessparameter deshalb so eingestellt, dass eine Temperatur des Substrats während des Abscheidens der Schicht zwischen 250 und 850 °C beträgt. Unter Prozessparametern sind in diesem Zusammenhang insbesondere eine Prozessenthalpie, ein Abstand des Substrats zu einem Plasmabrenner und eine Zeitdauer, in der das Substrat ohne Unterbrechung mit dem Prozessstrahl beaufschlagt wird oder eine Häufigkeit der Beaufschlagung mit dem Prozesstrahl zu verstehen.

In dem genannten Temperaturbereich können in vergleichsweise kurzer Zeit dichte Schichten erzeugt werden, was für den Einsatz der Schicht als Membran notwendig ist.

Die Temperatur des Substrats kann während des Prozesses mittels eines an sich bekannten Pyrometers gemessen werden. Dabei wird die vom Substrat emittierte Wärmestrahlung gemessen und ausgewertet. Die gemessenen Temperaturen können für eine Regelung der Prozessparameter genutzt werden. Es ist aber auch möglich, dass die Temperaturen in einer Testphase gemessen und in dieser Testphase die für die Einhaltung der Temperaturgrenzen notwendigen Prozessparameter bestimmt werden. Die so bestimmten Prozessparameter können dann bei einer folgenden Anwendung des Verfahrens genutzt und so die Temperaturgrenzen eingehalten werden.

Die beschriebene Schädigung des Substrats durch "Creeping" und/oder Bildung von Chromoxid sind nicht nur von der absoluten Temperatur, sondern auch von der Dauer, wie lange die Temperatur herrscht abhängig.

Die Prozessparameter werden deshalb insbesondere so eingestellt, dass eine Temperatur des Substrats während der Durchführung des Verfahrens nur für eine maximale Zeitdauer höher als eine Temperaturgrenze ist. Die maximale Temperatur und die maximale Zeitdauer sind sehr stark vom Material des Substrats abhängig. Bei der Verwendung eines metallischen Substrats, beispielsweise mit der o.g. Zusammensetzung beträgt die maximale Temperatur insbesondere 800 C und die maximale Zeitdauer insbesondere 5 Minuten. Für die maximale Temperatur gilt ausserdem immer noch der oben genannte Temperaturbereich von 250 bis 850 °C.

Vorzugsweise herrscht während des Spritzens in der Prozesskammer eine inerte Atmosphäre oder eine Atmosphäre mit reduziertem Sauerstoffgehalt

Bevorzugt weist die Membran neben ihrer lonenleitfähigkeit auch eine Elektronenleitfähigkeit auf.

Vorzugsweise wird der Plasmaspritzprozess so geführt, dass das Plasma den Prozessstrahl defokussiert und beschleunigt. Mit diesem Verfahren lassen sich besonders gut dünne und dichte Schichten herstellen.

In der Praxis hat es sich als vorteilhaft erwiesen, wenn der Prozessdruck in der Prozesskammer auf einen Wert von mindestens 50 Pa und höchstens 2000 Pa eingestellt wird.

Bei einem bevorzugten Ausführbeispiel besteht die die Membrane bildende Schicht aus einem keramischen Material, das ein Oxid vom Perowskit-Typ ist.

Insbesondere wird das Verfahren so geführt, dass das Ausgangsmaterial ein Pulver ist, dessen chemische Zusammensetzung im wesentlichen die gleiche ist wie die chemische Zusammensetzung der Schicht, d.h. als Ausgangsmaterial wird ein Pulver verwendet, welches im wesentlichen die gleiche chemische Zusammensetzung aufweist, welche auch die gespritzte Schicht aufweisen soll.

Im Hinblick auf die Sauerstoffpermeabilität hat es sich besonders bewährt, wenn die Schicht aus einem Perowskit besteht, welches Lanthan (La), Strontium (Sr), Kobalt (Co) und Eisen (Fe) enthält. Es versteht sich, dass in diesem Zusammenhang mit dem Begriff "besteht" gemeint ist, dass der überwiegende Teil der Schicht in Form der perowskitischen Phase vorliegt. Natürlich ist es durchaus möglich, dass in kleinerem Masse auch andere Phasen in dieser Schicht vorliegen.

Zur Herstellung insbesondere wasserstoffpermeabler Membrane kann beispielsweise eine Keramik mit einer perowskitischen Struktur verwendet werden, welche die Elemente (Ba), Zirkonium (Zr), Cerium (Ce), Yttrium (Y), Ytterbium (Yb) und Europium (Eu) oder Lanthan (La), Strontium (Sr), Chrom (Cr), Yttrium (Y) und Aluminium (Al) enthält.

Vorzugsweise wird das Plasmaspritzverfahren so durchgeführt, dass die auf dem Substrat erzeugte Schicht eine Dicke von weniger als 150 Mikrometer und vorzugsweise von 20 bis 60 Mikrometer aufweist. Diese Schichtdicke hat sich für sauerstoff- oder wasserstoffpermeable Membrane bewährt.

In der Praxis hat es sich bewährt, wenn die Gesamtflussrate des Prozessgases beim Plasmaspritzen kleiner als 200 SLPM ist und insbesondere 100 bis 160 SLPM beträgt (SLPM: standard liter per minute).

Bei einer ersten bevorzugten Verfahrensführung ist das Prozessgas eine Mischung aus Argon und Helium.

Bei einer zweiten bevorzugten Verfahrensführung besteht das Prozessgas aus Argon, Helium und Wasserstoff.

Auch hat es sich als vorteilhaft erwiesen, wenn der Prozessstrahl relativ zur Oberfläche des Substrats geschwenkt oder gerastert wird. Dies kann beispielsweise durch das Schwenken des Plasmagenerators bzw. der Plasmaquelle bzw. der Austrittsdüse erfolgen. Der Prozessstrahl wird also relativ zum Substrat so geführt, dass das Substrat gerastert wird, also ein-oder mehrmals von dem Prozessstrahl überstrichen wird. Alternativ oder ergänzend ist es natürlich auch möglich, das Substrat zu bewegen. Es gibt natürlich viele Möglichkeiten, diese Relativbewegung zwischen Prozessstrahl und Substrat zu realisieren. Diese Schwenkbewegung bzw. das Rastern des Substrats bewirkt, dass der in die Prozesskammer eingeleitete Sauerstoff möglichst gut mit dem Prozessstrahl oder der sich auf dem Substrat aufbauenden Schicht in Kontakt kommt.

Durch die Erfindung wird ferner eine lonenleitende Membran auf einem metallischen porösen Substrat, insbesondere eine sauerstoff- oder wasserstoffpermeable Membrane vorgeschlagen, welche mit einem Plasmaspritzverfahren in einer Prozesskammer als Schicht auf dem Substrat abgeschieden wird, wobei ein Ausgangsmaterial in Form eines Prozessstrahls mittels eines Prozessgases auf eine Oberfläche des Substrats aufgespritzt wird, wobei das Ausgangsmaterial bei einem niedrigen Prozessdruck, der höchstens 10 000 Pa ist, in ein Plasma injiziert und dort teilweise oder vollständig geschmolzen wird und das Substrat (10) aus einer Metalllegierung hergestellt ist, welche einen Chromanteil zwischen 5 und 20 Gewichtsprozent aufweist

Weitere vorteilhafte Massnahmen und bevorzugte Ausgestaltungen der Erfindung ergeben sich aus den abhängigen Ansprüchen.

Im Folgenden wird die Erfindung anhand von Ausführungsbeispielen und anhand der Zeichnung näher erläutert. In der schematischen Zeichnung zeigen teilweise im Schnitt:
- Fig. 1: eine schematische Darstellung einer Vorrichtung zur Durchführung eines erfindungsgemässen Verfahrens und
- Fig. 2: eine schematische Darstellung eines Substrats mit einer auf dem Substrat abgeschiedenen Schicht,
- Fig. 3: ein Detail des Substrats mit der Schicht,
- Fig. 4: ein Detail des Substrats in einer Draufsicht und
- Fig. 5: eine zweite Ausführungsform des Substrats mit einer Schicht.

Das erfindungsgemässe Plasmaspritzverfahren zum Herstellen einer ionenleitenden Membran wird im Folgenden anhand des für die Praxis besonders wichtigen Anwendungsfalls erläutert, dass die Membran eine selektiv für Sauerstoff permeable Membran ist, die also eine lonenleitfähigkeit für Sauerstoff aufweist. Vorzugsweise hat die Membran zudem auch eine Elektronenleitfähigkeit. Das Verfahren ist ein thermisches Spritzverfahren, das im Vakuum durchgeführt wird, also bei einem Prozessdruck, der kleiner ist als der Umgebungsdruck.

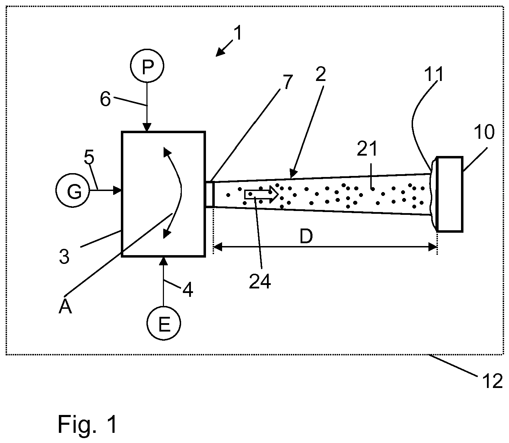

Fig. 1 zeigt in einer sehr schematischen Darstellung eine Plasmaspritzvorrichtung, die gesamthaft mit dem Bezugszeichen 1 bezeichnet ist, und die zur Durchführung eines erfindungsgemässen Verfahrens geeignet ist. Zudem ist in Figur 1 schematisch ein metallisches poröses Substrat 10 dargestellt, auf welchem eine sauerstoffpermeable Membran in Form einer Schicht 11 abgeschieden wird. Ferner ist eine Prozesskammer 12 angedeutet, in welcher das Verfahren durchgeführt wird.

Das erfindungsgemässe Verfahren umfasst ein Plasmaspritzen, welches gattungsgemäss in der WO-A-03/087422 oder auch in der US-A-5,853,815 beschrieben ist. Dieses Plasmaspritzverfahren ist ein thermisches Spritzen zur Herstellung eines sogenannten LPPS-Dünnfilms (LPPS = Low Pressure Plasma Spraying).

Speziell wird mit der in Fig. 1 dargestellten Plasmaspritzvorrichtung 1 ein LPPS-basiertes Verfahren durchgeführt. Bei diesem wird ein konventionelles LPPS-Plasmaspritzverfahren verfahrenstechnisch abgewandelt, wobei ein von Plasma durchströmter Raum ("Plasmaflamme" oder "Plasmastrahl") aufgrund der Änderungen ausgeweitet und auf eine Länge von bis zu 2.5 m ausgedehnt wird. Die geometrische Ausdehnung des Plasmas führt zu einer gleichmässigen Aufweitung - einer "Defokussierung" - und einer Beschleunigung eines Prozessstrahls, der mit einem Fördergas in das Plasma injiziert wird. Das Material des Prozessstrahls, das im Plasma zu einer Wolke dispergiert und dort teilweise oder vollständig geschmolzen wird, gelangt gleichmässig verteilt auf die Oberfläche des Substrats 10.

Die in Fig. 1 dargestellte Plasmaspritzvorrichtung 1 umfasst einen an sich bekannten Plasmagenerator 3 mit einem nicht näher dargestellten Plasmabrenner zur Erzeugung eines Plasmas. In an sich bekannter Weise wird mit dem Plasmagenerator 3 aus einem Ausgangsmaterial P, einem Prozessgas bzw. einem Prozessgasgemisch G und elektrischer Energie E ein Prozessstrahl 2 erzeugt. Die Einspeisung dieser Komponenten E, G und P ist in Fig. 1 durch die Pfeile 4, 5, 6 symbolisiert. Der erzeugte Prozessstrahl 2 tritt durch eine Austrittsdüse 7 aus und transportiert das Ausgangsmaterial P in Form des Prozessstrahls 2, in dem Materialpartikel 21 in einem Plasma dispergiert sind. Dieser Transport ist durch den Pfeil 24 symbolisiert. Die Materialpartikel 21 sind in der Regel Pulverpartikel. Die Morphologie der auf dem Substrat 10 abgeschiedenen Schicht 11 ist von den Prozessparametern abhängig und insbesondere vom Ausgangsmaterial P, der Prozessenthalpie und der Temperatur des Substrats 10. Vorzugsweise ist der Plasmagenerator 3 bzw. der Plasmabrenner schwenkbar bezüglich des Substrats 10 wie dies der Doppelpfeil A in Fig. 1 andeutet. Somit kann der Prozessstrahl 2 in einer Schwenkbewegung über das Substrat 10 hin- und herbewegt werden.

Durch diese Hin- und Herbewegung kann festgelegt werden, wie lange und wie häufig eine bestimmte Stelle auf dem Substrat 10 mit dem Prozessstrahl ohne Unterbrechung beaufschlagt wird. Je länger diese Zeitdauer ist oder je häufiger die Stelle beaufschlagt wird, desto höher ist die Temperatur des Substrats 10 an dieser Stelle. Die Hin- und Herbewegung, sowie die anderen Prozessparameter werden so eingestellt, dass eine Temperatur des Substrats 10 zwischen 250 und 850 °C beträgt. Die dafür notwendigen Prozessparameter werden dazu insbesondere in Testläufen bestimmt. Ausserdem werden die Prozessparameter so eingestellt, dass die Temperatur des Substrats nur maximal 5 Minuten grösser als 800 °C ist. Damit wird zum einen die Ausbildung einer Chromoxidschicht und zum anderen so genanntes Creeping verhindert oder nur minimal ermöglicht.

Das poröse Substrat 10 wird durch Sintern aus einer Eisenlegierung hergestellt, die einen Chromanteil aufweist, der grösser als 25 Gewichtsprozent ist. Das Substrat besteht beispielsweise aus einer Legierung aus 47 %Nickel (Ni), 22 % Chrom (Cr), 18 % Eisen (Fe), 9 % Molybdän (Mo), 1,5 % Kobalt (Co), 0,6 % Wolfram (W), 0,1 % Kohlenstoff (C), 1 % Mangan (Mn), 1 % Silizium (Si) und 0,008 % Bor (B).

Das Substrat weist eine auf ein Gesamtvolumen des Substrats bezogene Nutzporosität von 30 % auf.

Bei dem hier beschriebenen LPPS-Prozess wird bei einem niedrigen Prozessdruck, der höchstens 10 000 Pa und vorzugsweise mindestens 50 Pa und höchstens 2000 Pa ist, das Ausgangsmaterial P in ein den Materialstrahl defokussierendes Plasma injiziert und darin teilweise oder vollständig geschmolzen oder zumindest plastisch gemacht. Dazu wird ein Plasma mit ausreichend hoher spezifischer Enthalpie erzeugt, so dass eine sehr dichte und dünne Schicht 11 auf dem Substrat entsteht. Die Variation der Gefüge ist durch die Beschichtungsbedingungen, insbesondere von Prozessenthalpie, Arbeitsdruck in der Beschichtungskammer sowie den Prozessstrahl wesentlich beeinflusst und steuerbar. Somit hat der Prozessstrahl 2 Eigenschaften, die durch steuerbare Prozessparameter bestimmt werden.

Zur Herstellung der sauerstoffpermeablen Membran wird die Schicht 11 so erzeugt, dass sie eine sehr dichte Mikrostruktur aufweist.

Zunächst wird nun der Verfahrensschritt des Erzeugens der Schicht 11 mittels LPPS näher erläutert.

Als Ausgangsmaterial P wird ein Pulver geeigneter Zusammensetzung gewählt, wie dies weiter hinten noch erläutert wird. Wie bereits erwähnt, ist beim LPPS- Verfahren die Plasmaflamme aufgrund der eingestellten Prozessparameter im Vergleich zu konventionellen Plasmaspritzverfahren sehr lang. Zudem ist die Plasmaflamme stark aufgeweitet. Es wird ein Plasma mit hoher spezifischer Enthalpie erzeugt, wodurch eine hohe Plasmatemperatur resultiert. Durch die hohe Enthalpie und die Länge bzw. die Grösse der Plasmaflamme bedingt kommt es zu einem sehr hohen Energieeintrag in die Materialpartikel 21, die dadurch zum einen stark beschleunigt und zum anderen auf eine hohe Temperatur gebracht werden, sodass sie sehr gut aufschmelzen und auch noch nach ihrer Deposition auf dem Substrat 10 sehr heiss sind. Da andererseits die Plasmaflamme und damit der Prozessstrahl 2 sehr stark aufgeweitet ist, ist der lokale Wärmefluss in das Substrat 10 gering, sodass eine thermische Schädigung des Materials vermieden wird. Es wird insbesondere vermieden, dass der poröse Aufbau des Substrats 10 an der Grenze zur Schicht 11 geschädigt wird, was die Einsatzfähigkeit der Schicht 10 als Membran beeinträchtigen würde. Die aufgeweitete Plasmaflamme hat ferner zur Folge, dass üblicherweise beim einmaligen Überstreichen des Substrats 10 mit dem Prozessstrahl 2 die Materialpartikel 21 in Form einzelner Spritzer (Splats) deponiert werden, die noch keine durchgehende, d.h. zusammenhängende Schicht erzeugen. Dadurch sind sehr dünne Schichten 11 herstellbar. Die hohe kinetische und thermische Energie, welche die Materialpartikel bei ihrem im Vergleich zu konventionellen Plasmaspritzverfahren langen Aufenthalt in der Plasmaflamme erhalten, begünstigen die Ausbildung einer sehr dichten Schicht 11, die insbesondere wenige Grenzflächenhohlräume zwischen aufeinanderliegenden Spritzern aufweist.

Das Plasma wird beispielsweise in einem an sich bekannten Plasmabrenner im Plasmagenerator 3 mit einem elektrischen Gleichstrom und mittels einer Stiftkatode sowie einer ringförmigen Anode erzeugt. Die Leistungsaufnahme des Plasmabrenners liegt im Bereich von bis zu 180 kW. Die dem Plasma zugeführte Leistung, die effektive Leistung, kann empirisch bezüglich der resultierenden Schichtstruktur ermittelt werden. Die effektive Leistung, die durch die Differenz zwischen der elektrischen Leistung und der durch Kühlung abgeführten Wärme gegeben ist, liegt erfahrungsgemäss z. B. im Bereich von 40 bis 130 kW, insbesondere 80 bis 100 kW. Hierzu hat es sich bewährt, wenn der elektrische Strom für die Plasmaerzeugung zwischen 1000 und 3000 A liegt, insbesondere zwischen 1500 und 2600 A.

Für den Prozessdruck des LPPS-TF-Plasmaspritzens zum Erzeugen der sauerstoffpermeablen Membran wird in der Prozesskammer 12 ein Wert zwischen 10 und 10000 Pa gewählt, vorzugsweise zwischen 50 und 2000 Pa.

Das Ausgangsmaterial P wird als Pulverstrahl in das Plasma injiziert.

Das Prozessgas für die Erzeugung des Plasmas ist vorzugsweise ein Gemisch von Inertgasen, insbesondere eine Gemisch von Argon Ar, Helium He und gegebenenfalls Wasserstoff H. In der Praxis haben sich die folgenden Gasflussraten für das Prozessgas besonders bewährt:
Ar-Flussrate: 30 bis 150 SLPM, insbesondere 50 bis 100 SLPM
H₂-Flussrate: Null bis 20 SLPM, insbesondere 2 bis 10 SLPM
He-Flussrate: Null bis 150 SLPM, insbesondere 20 bis 100 SLPM,
wobei die Gesamtflussrate des Prozessgases vorzugsweise kleiner als 200 SLPM ist und insbesondere 100 bis 160 SLPM beträgt.

Es kann vorteilhaft sein, wenn das Substrat - zusätzlich oder alternativ - während des Materialauftrags mit Dreh- oder Schwenkbewegungen relativ zu dieser Wolke bewegt wird

Im Folgenden wird auf das für die Praxis wichtige Beispiel Bezug genommen, dass die sauerstoffpermeable Membrane aus einer Keramik besteht, welche neben Sauerstoff die Elemente Lanthan (La), Strontium (Sr), Kobalt (Co) und Eisen (Fe) enthält. Solche Keramiken werden als LSCF bezeichnet. Dabei wird angestrebt, dass die Membran möglichst vollständig aus einer perowskitischen Struktur besteht. Es versteht sich jedoch, dass die Erfindung nicht auf solche Substanzen beschränkt ist, sondern insbesondere auch für andere keramische Materialien, speziell Oxide vom Perowskit-Typ geeignet ist.

Wie bereits erwähnt, wird das Ausgangsmaterial P in Form eines Pulvers bereitgestellt. Das Plasmaspritzverfahren wird dann so durchgeführt, dass die chemische Zusammensetzung der Schicht zumindest im wesentlichen die gleiche ist wie die chemische Zusammensetzung des Ausgangsmaterials.

LSCF gehört als keramisches Material zu den Oxiden vom Perowskit-Typ, welche im Wesentlichen die Form ABO₃ haben. Dabei steht A für Laₓ Sr₁₋ₓ und B für Co_{y} Fe_{1-y}. Es ist jedoch zu bemerken, dass die Stöchiometrie nicht genau erfüllt sein muss. Es ist durchaus möglich, dass sich der La-Gehalt und der Sr-Gehalt bzw. der Co-Gehalt und der Fe-Gehalt nicht genau zu eins ergänzen. Auch kann der Sauerstoffgehalt von der exakten Stöchiometrie abweichen. Daher ist es üblich den Sauerstoffgehalt mit 3-δ anzugeben, wobei δ die Abweichung des Sauerstoffgehalts von dem stöchiometrischen Gleichgewicht bezeichnet. Das Minus-Zeichen deutet darauf hin, dass diese Abweichung in aller Regel ein Sauerstoffdefizit ist, d.h. der Sauerstoff ist unterstöchiometrisch vorhanden.

In dem hier beschriebenen Beispiel liegt LACF in der Form
La_{0.58} Sr_{0.4} Co_{0.2} Fe_{0.8} O_{3.δ}
vor. Das Ausgangsmaterial P liegt als Pulver vor. Zur Herstellung der Pulverpartikel können verschiedene Verfahren angewendet werden: beispielsweise Sprühtrocknen oder eine Kombination von Aufschmelzen und anschliessendem Brechen und/oder Mahlen der erstarrten Schmelze.

Die Herstellung solcher Pulver an sich ist bekannt und bedarf hier keiner näheren Erläuterung. Im Hinblick auf das Plasmaspritzen ist es bevorzugt, wenn die Pulverkörner beispielsweise eine Grösse von 25 +/- 5µm haben.

Der Wert δ für die Abweichung des Sauerstoffgehalts von der Stöchiometrie beträgt beispielsweise 0.3.

Für die beiden im folgenden beschriebenen Beispiele wird als Ausgangsmaterial jeweils La_{0.58} Sr_{0.4} Co_{0.2} Fe_{0.8} O_{3-δ} verwendet. Der Prozessdruck in der Prozesskammer 12 wird auf einen Wert zwischen 50 und 2000 Pa eingestellt. Mit einem Plasmabrenner, der ein Plasma hoher spezifischer Enthalpie von bis zu 10'000 bis 15'000 kJ/kg erzeugen kann und der eine Leistung von bis zu 180 kW aufnimmt, wird ein Plasmastrahl bzw. ein Prozessstrahl 2 hoher Enthalpie erzeugt. Der Prozessstrahl 2 weist eine Länge von 1000 bis 2000 mm und einen Durchmesser von bis zu 200-400 mm auf. Die Länge des Prozessstrahls 2 entspricht im Wesentlichen der Spritzdistanz, das heisst dem Abstand D zwischen der Austrittsdüse 7 und dem Substrat 10. Als Substrat dient zum Beispiel eine poröse Platte aus einer Hochtemperatur-Nickelbasislegierung oder aus einer feuerfesten Keramik. Das Ausgangsmaterial P wird mittels zweier Pulverzuführungen eingebracht, wobei die Förderrate bis 120 g/min, typischerweise 40 g/min beträgt. Mittels einer Schwenkbewegung des Plasmabrenners wird eine dünne und dichte Schicht 11 auf das Substrat 10 aufgebracht, wobei der hohe Energieeintrag in die Materialpartikel 21 und die hohe (Ultraschall-) Geschwindigkeit im Prozessstrahl 2 einen sehr dichten Aufbau der Schicht 11 ermöglichen. Die Schicht 11 wird gespritzt bis sie abschliessend eine Dicke von 20-60 µm aufweist. Die Beschichtungszeit beträgt etwa eine Minute. Während des thermischen Spritzens wird der Prozesskammer 12 Sauerstoff zugeführt und zwar mit einer Flussrate von mindestens 1% vorzugsweise von mindestens 2% der Gesamtflussrate des Prozessgases. Hierdurch wird die Reduktion und die Degradation des Ausgangsmaterials P bzw. seiner Komponenten vermieden oder zumindest stark vermindert. Insbesondere lässt sich die Ausscheidung bzw. die Abscheidung von elementarem Co oder Fe oder derer Verbindungen vermeiden oder zumindest stark vermindern. Hieraus ergibt sich, dass die chemische und Phasen-Zusammensetzung der Schicht 11 im wesentlichen die gleiche ist wie die des Ausgangsmaterials P.

### Beispiel 1

Der Prozess wird wie oben beschrieben durchgeführt. Als Prozessgas wird eine Mischung aus Argon und Helium verwendet, wobei die Ar-Flussrate 80 SLPM beträgt und die He-Flussrate 40 SLPM, sodass die Gesamtflussrate des Prozessgases 120 SLPM beträgt. Der Strom für die Erzeugung des Plasmas beträgt 2600 A.

### Beispiel 2

Der Prozess wird wie oben beschrieben durchgeführt. Als Prozessgas wird eine Mischung aus Argon, Helium und Wasserstoff verwendet, wobei die Ar-Flussrate 80 SLPM beträgt, die He-Flussrate 20 SLPM und die H₂-Flussrate 6 SLPM, sodass die Gesamtflussrate des Prozessgases 106 SLPM beträgt. Der Strom für die Erzeugung des Plasmas beträgt 2600 A.

In beiden Fällen resultieren sauerstoffpermeable Membrane, deren chemische Zusammensetzung und perowskitische Phasenstruktur im Wesentlichen derjenigen des Ausgangsmaterials entsprechen.

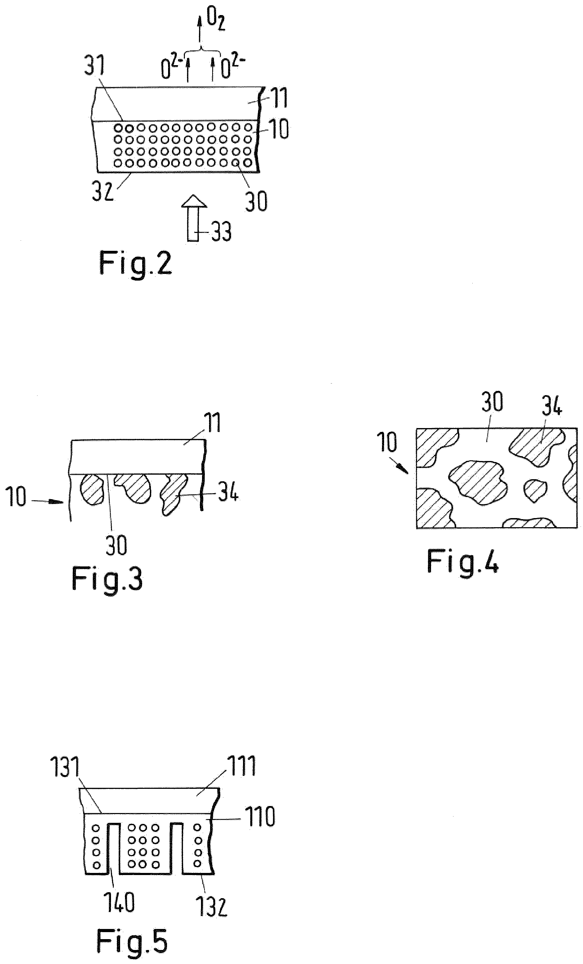

In Fig. 2 ist sehr schematisch die als Sauerstoff permeable Membran wirkende Schicht 11 auf dem porösen Substrat 10 dargestellt. Das Substrat weist Poren 30 auf, die gleichmässig in dem Substrat 10 verteilt und so untereinander verbunden sind, dass das Substrat 10 gasdurchlässig ist. Die genannten Verbindungen sind in der Fig. 2 nicht zu sehen, da es sich hier zum einen um eine sehr vereinfachte Darstellung und zum anderen nur um einen Schnitt in einer Ebene handelt, die Poren aber selbstverständlich dreidimensional angeordnet sind. Die Schicht 11 ist an einer Beschichtungsoberfläche 31 des Substrats 10 angeordnet. An einer der Beschichtungsoberfläche 31 gegenüber liegenden Substratrückseite 32 liegt ein unter Druck stehendes Gasgemisch an, aus dem Sauerstoffe extrahiert werden soll. Das Gasgemisch wird durch einen Pfeil 33 symbolisiert. Das Gasgemisch wird durch die untereinander verbundenen Poren 30 zur Beschichtungsoberfläche 31 und damit zur Schicht 11 transportiert. Auf Grund der Permeabilität der Schicht 11 für Sauerstoff-Ionen treten diese durch die Schicht 11 hindurch und vereinigen sich anschliessend zu Sauerstoffmolekülen O₂. Damit wird Sauerstoff aus dem Gasgemisch extrahiert.

In Fig. 3 ist ein Ausschnitt des Substrats 10 und der Schicht 11 detaillierter dargestellt. Dabei sind zur Schicht 11 hin offene Poren 30 dargestellt, die ebenfalls mit anderen Poren verbunden sind. Die Poren 30 bilden sich zwischen Metallpartikeln 34 aus, die durch Sintern zusammengefügt wurden. In der Fig. 3 ist gut zu sehen, dass das Gasgemisch durch das Substrat 10 zur Schicht 11 geleitet werden kann.

In der Fig. 4 ist sehr schematisch ein Ausschnitt des Substrats in einer Draufsicht dargestellt. Die Poren 30 bilden sich wieder zwischen den Metallpartikeln 34 aus. Ein Anteil einer Gesamtporenfläche an einer Gesamtfläche der Beschichtungsoberfläche beträgt dabei ca. 40 %, d.h. der Anteil der nicht schraffierten Fläche an der der Gesamtfläche des dargestellten Rechtsecks beträgt ca. 40 %. Die mittlere Porengrösse der Poren 30 beträgt dabei mindestens 1 Mikrometer.

In Fig. 5 ist ein Substrat 110 mit einer Schicht 111 dargestellt. Um die Zuführung des Gasgemischs zur Schicht 111 zu verbessern, weist das Substrat 110 Mikrokanäle 140 auf, die einen Durchmesser zwischen 5 und 150 Mikrometer haben können. Die Mikrokanäle 140 reichen von einer Substratrückseite 132 in Richtung einer Beschichtungsoberfläche 131, wobei sie vor Erreichen der Beschichtungsoberfläche 131 enden. Die Mikrokanäle 140 werden entweder vor oder nach der Beschichtung durch Laserbohren eingebracht.

## Patentansprüche

1. Plasmaspritzverfahren zum Herstellen einer ionenleitenden Membran insbesondere einer wasserstoffionenleitenden oder sauerstoffionenleitenden Membran, bei welchem die Membran in einer Prozesskammer (12) als Schicht (11, 111) auf einem Substrat (10, 110) abgeschieden wird, wobei ein Ausgangsmaterial (P) in Form eines Prozessstrahls (2) mittels eines Prozessgases (G) auf eine Beschichtungsoberfläche (31, 131) des Substrats (10, 110) aufgespritzt wird, wobei das Ausgangsmaterial bei einem niedrigen Prozessdruck, der höchstens 10 000 Pa ist, in ein Plasma injiziert und dort teilweise oder vollständig geschmolzen wird,
**dadurch gekennzeichnet, dass**
das Substrat (10, 110) Poren (30) aufweist, die so untereinander verbunden sind, dass das Substrat (10, 110) gasdurchlässig ist und ein Anteil einer Gesamtporenfläche an einer Gesamtfläche der Beschichtungsoberfläche (31, 131) wenigstens 30 %, insbesondere wenigstens 40 % beträgt und
vor oder nach dem Beschichten in das Substrat (110) Mikrokanäle (140) zur Verbesserung einer Gasflussmöglichkeit in Richtung Beschichtungsoberfläche (131) eingebracht werden.

2. Plasmaspritzverfahren nach Anspruch 1,
**dadurch gekennzeichnet, dass**
die Poren (30) eine mittlere Porengrösse von mindestens 1 Mikrometer aufweisen.

3. Plasmaspritzverfahren nach Anspruch 1 oder 2,
**dadurch gekennzeichnet, dass**
das Substrat (10, 110) eine auf ein Gesamtvolumen des Substrats (10, 110) bezogene Nutzporosität von mindestens 20 %, insbesondere mindestens 30 % aufweist.

4. Plasmaspritzverfahren nach Anspruch 1,
**dadurch gekennzeichnet, dass**
die Mikrokanäle (140) von einer der Beschichtungsoberfläche (131) gegenüberliegenden Substratrückseite (132) in Richtung Beschichtungsoberfläche (131) orientiert sind und vor der Beschichtungsoberfläche (131) enden.

5. Plasmaspritzverfahren nach einem der Ansprüche 1 bis 4,
**dadurch gekennzeichnet, dass**
das Substrat (10, 110) aus einer Eisenlegierung hergestellt ist, welche einen Chromanteil aufweist, der grösser als 20 Gewichtsprozent und insbesondere grösser als 25 Gewichtsprozent ist.

6. Plasmaspritzverfahren nach einem der Ansprüche 1 bis 5,
**dadurch gekennzeichnet, dass**
Prozessparameter so eingestellt werden, dass eine Temperatur des Substrats (10, 110) während der Durchführung des Verfahrens zwischen 250 und 850 °C beträgt.

7. Plasmaspritzverfahren nach Anspruch 6,
**dadurch gekennzeichnet, dass**
Prozessparameter so eingestellt werden, dass eine Temperatur des Substrats (10, 110) während der Durchführung des Verfahrens nur für eine maximale Zeitdauer, insbesondere 5 Minuten höher als eine Temperaturgrenze von insbesondere 800°C ist.

8. Plasmaspritzverfahren nach einem der Ansprüche 1 bis 7,
**dadurch gekennzeichnet, dass**
die Schicht (11, 111), welche die Membran bildet, aus einem keramischen Material besteht, das ein Oxid vom Perowskit-Typ ist.

9. Plasmaspritzverfahren nach Anspruch 8,
**dadurch gekennzeichnet, dass**
die Schicht (11, 111) aus einem Perowskit besteht, weiches Lanthan (La), Strontium (Sr), Kobalt (Co), Eisen (Fe), Chrom (Cr), Titan (Ti), Barium (Ba), Zirkonium (Zr), Cerium (Ce), Yttrium (Y), Ytterbium (Yb), Europium (Eu) oder Aluminium (AI) enthält.

10. Plasmaspritzverfahren nach einem der Ansprüche 1 bis 9,
**dadurch gekennzeichnet, dass**
die auf dem Substrat (10, 110) erzeugte Schicht (11, 111) eine Dicke von weniger als 150 Mikrometer und vorzugsweise von 20 bis 60 Mikrometer aufweist.

11. Plasmaspritzverfahren nach einem der Ansprüche 1 bis 10,
**dadurch gekennzeichnet, dass**
eine Gesamtflussrate des Prozessgases kleiner als 200 SLPM ist und insbesondere 100 bis 160 SLPM beträgt.

12. Plasmaspritzverfahren nach einem der Ansprüche 1 bis 11,
**dadurch gekennzeichnet, dass**
das Prozessgas eine Mischung aus Argon und Helium ist.

13. Plasmaspritzverfahren nach einem der Ansprüche 1 bis 12,
**dadurch gekennzeichnet, dass**
der Prozessstrahl (2) relativ zur Beschichtungsoberfläche (31, 131) des Substrats (10) geschwenkt oder gerastert wird.

14. lonenleitende Membran insbesondere eine wasserstoffionenleitende oder sauestoffionenleitende Membran auf einem Substrat (10, 110), welche mit einem Plasmaspritzverfahren in einer Prozesskammer (12) als Schicht (11, 111) auf dem Substrat (10, 110) abgeschieden wird, wobei ein Ausgangsmaterial (P) in Form eines Prozessstrahls (2) mittels eines Prozessgases (G) auf eine Beschichtungsoberfläche des Substrats (10, 110) aufgespritzt wird, wobei das Ausgangsmaterial bei einem niedrigen Prozessdruck, der höchstens 10 000 Pa ist, in ein Plasma injiziert und dort teilweise oder vollständig geschmolzen wird,
**dadurch gekennzeichnet, dass**
das Substrat (10, 110) Poren (30) aufweist, die so untereinander verbunden sind, dass das Substrat (10, 110) gasdurchlässig ist und ein Anteil einer Gesamtporenfläche an einer Gesamtfläche der Beschichtungsoberfläche (31, 131) wenigstens 40 % beträgt und das Substrat (110) vor oder nach dem Beschichten eingebrachte Mikrokanäle (140) zur Verbesserung einer Gasflussmöglichkeit in Richtung Beschichtungsoberfläche (131) aufweiset.

## Claims

1. A plasma spray method for the manufacture of an ion conducting membrane, in particular of a hydrogen ion conducting membrane or of an oxygen ion conducting membrane, wherein the membrane is deposited as a layer (11, 111) on a substrate (10, 110) in a process chamber (12), wherein a starting material (P) is sprayed onto a coating surface (31, 131) of the substrate (10, 110) by means of a process gas (G) in the form of a process beam (2), wherein the starting material is injected into a plasma at a low process pressure which is at most 10000 Pa and is partially or completely melted there,
**characterized in that**
the substrate (10, 110) has pores (30) which are connected amongst one another so that the substrate (10, 110) is gas permeable and a portion of an overall pore area of an overall area of the coating surface (31, 131) amounts to at least 30%, in particular to at least 40% and micro-passages (140) are introduced into the substrate (110) before or after the coating for the improvement of a gas flow possibility in the direction of the coating surface (131).

2. A plasma spray method in accordance with claim 1,
**characterized in that**
the pores (30) have a mean pore size of at least 1 micrometer.

3. A plasma spray method in accordance with claim 1 or claim 2,
**characterized in that**
the substrate (10, 110) has a useful porosity of at least 20%, in particular of at least 30% with respect to an overall volume of the substrate (10, 110).

4. A plasma spray method in accordance with claim 1,
**characterized in that**
the micropassages (140) are orientated in the direction of the coating surface (131) from a rear substrate side (132) lying opposite the coating surface (131) and end before the coating surface (131).

5. A plasma spray method in accordance with any one of the claims 1 to 4,
**characterized in that**
the substrate (10, 110) is manufactured from an iron alloy which has a portion of chrome which is larger than 20 weight percent and in particular is larger than 25 weight percent.

6. A plasma spray method in accordance with any one of the claims 1 to 5,
**characterized in that**
process parameters are set so that a temperature of the substrate (10, 110) amounts to between 250 and 850°C during the carrying out of the method.

7. A plasma spray method in accordance with claim 6,
**characterized in that**
process parameters are set so that a temperature of the substrate (10, 110) is higher than a temperature boundary of in particular 800°C only for a maximum period of time, in particular of 5 minutes, during the carrying out of the method.

8. A plasma spray method in accordance with any one of the claims 1 to 7,
**characterized in that**
the layer (11, 111), which forms the membrane, is composed of a ceramic material which is an oxide of the perovskite type.

9. A plasma spray method in accordance with claim 8,
**characterized in that**
the layer (11, 111) is composed of a perovskite which includes lanthanum (La), strontium (Sr), cobalt (Co), iron (Fe), chromium (Cr), titanium (Ta), barium (Ba), zirconium (Zr), cerium (Ce), yttrium (Y), ytterbium (Yb), europium (Eu) or aluminum (Al).

10. A plasma spray method in accordance with any one of the claims 1 to 9,
**characterized in that**
the layer (11, 111) generated on the substrate (10, 110) has a thickness of less than 150 micrometermicrometers and preferably of 20 to 60 micrometermicrometers.

11. A plasma spray method in accordance with any one of the claims 1 to 10,
**characterized in that**
an overall flow rate of the process gas is smaller than 200 SLPM and in particular amounts to 100 to 160 SLPM.

12. A plasma spray method in accordance with any one of the claims 1 to 11,
**characterized in that**
the process gas is a mixture of argon and helium.

13. A plasma spray method in accordance with any one of the claims 1 to 12,
**characterized in that**
the process beam (2) is pivoted or rastered relative to the coating surface (31, 131) of the substrate.

14. An ion conducting membrane, in particular a hydrogen ion conducting membrane or an oxygen ion conducting membrane on a substrate (10, 110) which is deposited as a layer (11, 111) on the substrate (10, 110) with a plasma spray method in a process chamber (12), wherein a starting material (P) is sprayed onto a coating surface of the substrate (10, 110) by means of a process gas (G) in the form of a process beam (2), wherein the starting material is injected into a plasma at a low process pressure which is at most 10000 Pa and is partially or completely melted there,
**characterized in that**
the substrate (10, 110) has pores (30) which are connected amongst one another so that the substrate (10, 110) is gas permeable and a portion of an overall pore surface of an overall surface of the coating surface (31, 131) amounts to at least 40% and the substrate (110) has micro-passages (140) introduced before or after the coating for the improvement of a gas flow possibility in the direction of the coating surface (131).

## Revendications

1. Un procédé de projection plasma pour la production d'une membrane conductrice d'ions, en particulier d'une membrane conductrice d'ions d'hydrogène ou d'une membrane conductrice d'ions de l'oxygéne, dans lequel la membrane est déposée sous la forme d'une couche (11, 111) sur un substrat (10, 110) dans une chambre de traitement, dans lequel une matière de départ (P) sous la forme d'un jet de traitement (2) est pulvérisé sur une surface de revêtement (31, 131) du substrat (10, 110) au moyen d'un gaz de traitement (G), dans lequel la matière de départ est injectée dans un plasma à une basse pression de traitement, qui est au plus de 10000 Pa, et est partiellement ou complètement fondu là-bas, **caractérisé en ce, que** le substrat (10, 110) présente des pores (30), qui sont connectés entre eux, que le substrat (10, 110) est perméable aux gaz et une partie d'une surface de pores totale d'une surface totale de la surface de revêtement (31, 131) est au moins 30 %, en particulier au moins 40 % et que des micricanaux (140) sont introduit dans le substrat (110) avant ou après le revêtement pour améliorer la possibilité d'écoulement de gaz en direction de la surface de revêtement (131).

2. Un procédé de projection plasma selon la revendication 1, **caractérisé en ce, que** les pores (30) ont une taille de pores moyennes d'au moins 1 micromètre.

3. Un procédé de projection plasma selon la revendication 1 ou 2, **caractérisé en ce, que** le substrat (10, 110) a une porosité utile par rapport à volume totale du substrat (10, 110) d'au moins 20 %, en particulier au moins 30 %.

4. Un procédé de projection plasma selon la revendication 1, **caractérisé en ce, que** les microcanaux (140) sont orientés en direction de la surface de revêtement (131) partant d'un côté arrière du substrat (132) opposé à la surface de revêtement (131) et ils se terminent avant la surface de revêtement (131).

5. Un procédé de projection plasma selon l'une des revendications 1 à 4, **caractérisé en ce, que** le substrat (10, 110) est fait d'un alliage de fer ayant une teneur en chrome supérieur à 20 pourcentage en poids et en particulier supérieur à 25 pourcentage en poids.

6. Un procédé de projection plasma selon l'une des revendications 1 à 5, **caractérisé en ce, que** des paramètres de processus sont réglés tellement, qu'une température du substrat (10, 110) est de 250 à 850° C au cours de l'exécution du procédé.

7. Un procédé de projection plasma selon la revendication 6, **caractérisé en ce, que** des paramètres de processus sont réglés tellement, qu'une température du substrat (10, 110) au cours de l'exécution du procédé est supérieure à une limite de température de particulièrement 800° C pendant une durée maximale, en particulier 5 minutes.

8. Un procédé de projection plasma selon l'une des revendications 1 à 7, **caractérisé en ce, que** la couche (11, 111), qui forme la membrane, est faite d'un matériau céramique, qui est un oxyde du type de pérovskite.

9. Un procédé de projection plasma selon la revendication 8, **caractérisé en ce, que** la couche (11, 111) est composée d'une pérovskite, qui contient de lanthane (La), de strontium (Sr), de cobalt (Co), de fer (Fe), de chrome (Cr), de titane (Ti), de baryum (Ba), de zirconium (Zr), de cérium (Ce), de yttrium (Y), de ytterbium (Yb), d'europium (Eu) ou d'aluminium (Al).

10. Un procédé de projection plasma selon l'une des revendications 1 à 9, **caractérisé en ce, que** la couche (11, 111) générée sur le substrat (10, 110), a une épaisseur inférieure à 150 micromètres, et de préférence de 20 à 60 micromètres.

11. Un procédé de projection plasma selon l'une des revendications 1 à 10, **caractérisé en ce, qu'**un débit total du gaz de traitement est inférieur à 200 SLPM et est en particulier de 100 à 160 SLPM.

12. Un procédé de projection plasma selon l'une des revendications 1 à 11, **caractérisé en ce, que** le gaz de traitement est un mélange d'argon et d'hélium.

13. Un procédé de projection plasma selon l'une des revendications 1 à 12, **caractérisé en ce, que** le jet de traitement (2) est pivoté ou tramé par rapport à la surface de revêtement (31, 131) du substrat.

14. Une membrane conductrice d'ions, en particulier une membrane conductrice d'ions d'hydrogène ou une membrane conductrice d'ions de l'oxygène sur un substrat (10, 110), qui est déposée avec un procédé de projection plasma sous la forme d'une couche (11, 111) sur le substrat (10, 110) dans une chambre de traitement, dans lequel une matière de départ (P) sous la forme d'un jet de traitement (2) est pulvérisé sur une surface de revêtement du substrat (10, 110) au moyen d'un gaz de traitement (G), dans lequel la matière de départ est injectée dans un plasma à une basse pression de traitement, qui est au plus de 10000 Pa, et est partiellement ou complètement fondu là-bas, **caractérisé en ce, que** le substrat (10, 110) présente des pores (30), qui sont connectés entre eux, que le substrat (10, 110) est perméable aux gaz et une partie d'une surface de pores totale d'une surface totale de la surface de revêtement (31, 131) est au moins 40 % et le substrat (110) a des micricanaux (140), qui sont introduit avant ou après le revêtement pour améliorer la possibilité d'écoulement de gaz en direction de la surface de revêtement (131).
